# EUROPÄISCHE PATENTANMELDUNG

(11) **EP 1 245 935 A2**
(43) Veröffentlichungstag der Anmeldung: **02.10.2002**
(21) Anmeldenummer: 02005100.9
(22) Anmeldetag: 07.03.2002
(51) Int. Cl.: G01F 1/58

(54) **Durchflussmesseinrichtung**

(30) Priorität: 22.03.2001 DE 10114103
(71) Anmelder: ABB PATENT GmbH, 68526 Ladenburg (DE)
(72) Erfinder: Keese, Dieter, 37194 Wahlsburg (DE); Wegener, Hans-Jürgen, 37083 Göttingen (DE)
(74) Vertreter: Schmidt, Karl Michael, Dipl.-Phys.

(57) **Zusammenfassung**

Die Erfindung betrifft eine Durchflußmeßeinrichtung mit aus Kunststoff bestehender Messfluidleitung gemäß Oberbegriff des Patentanspruches 1. Um hierbei zu erreichen, daß eine gute und baulich unaufwendigere Erdung des Messfluids möglich ist, ist erfindungsgemäß vorgeschlagen, daß zur galvanischen Erdung des Messfluids ein ringförmiges, aus elektrisch leitfähigem Kunststoff bestehendes Erdungselement (20) vorgesehen ist, welches ringförmig um den Messfluidstrom angeordnet, und denselben elektrisch leitend berührend ist.

## Beschreibung

Die Erfindung betrifft eine Durchflußmeßeinrichtung mit aus Kunststoff bestehender Messfluidleitung, gemäß Oberbegriff des Patentanspruches 1.

Durchflußmeßeinrichtungen, insbesondere induktive Durchflußmeßeinrichtungen, weisen ein Meßrohr aber auch Zuflußleitungen auf, durch welche das Meßfluid fließt. Um das Meßrohr herum ist eine Meßanordnung, beispielsweise eine Magnetanordnung angeordnet, die über durch die Wandung des mit einer nicht elektrischleitfähigen Auskleidung, ausgekleideten Meßrohres hindurchtretende Elektroden mit der strömenden Flüssigkeit in galvanisch leitender Verbindung steht. Das Meßrohr selbst ist wiederum innerhalb eines Rohrsystems anzuordnen, in dem der Durchfluß vom Meßmedium gemessen werden soll. Das Rohr- oder Leitungssystem kann dabei aus Kunststoff oder mit Kunststoff ausgekleideten Rohren bestehen.

Bei der Verwendung von Kunstoffrohren oder zumindest mit Kunststoff ausgekleideten Rohren muss das Meßfluid zur Vermeidung von Messfehlern geerdet werden. Zur elektrischen bzw. galvanischen Erdung des Meßfluids werden hierzu mit dem Messfluid in Berührung kommende Elektroden verwendet. Diese sind relativ aufwendig und koststpielig, da diese aus Titan, Platin oder ähnlichen Materialien bestehen. Außerdem ist ihre Anordnung baulich nicht unaufwendig.

Der Erfindung liegt somit die Aufgabe zugrunde, eine Durchflußmeßeinrichtung mit aus Kunststoff bestehender Messfluidleitung dahingehend zu verbessern, daß eine gute und baulich unaufwendigere Erdung des Messfluids möglich ist.

Die gestellte Aufgabe ist im Hinblick auf eine Durchflußmeßeinrichtung der gattungsgemäßen Art erfindungsgemäß durch die kennzeichnenden Merkmale des Patentanspruches 1 gelöst.

Weitere vorteilhafte Ausgestaltung der erfindungsgemäßen Durchflußmeßeinrichtung sind in den abhängigen Ansprüchen angegeben.

Kern im Hinblick auf die Erfindung ist hierbei, daß zur galvanischen Erdung des Messfluids ein ringförmiges, aus elektrisch leitfähigem Kunststoff bestehendes Erdungselement vorgesehen ist, welches ringförmig um den Messfluidstrom angeordnet, und denselben elektrisch leitend berührend ist. Dadurch können nunmehr aus elektrisch nicht leitfähigem Materialm bestehende Rohrleitungen verwendet werden. Mit anderen Worten, es kann auf eine einfache und wirksame Weise eine Erdung des Messfluids erfolgen, und die Durchflussmesseinrichtung kann somit ohne aufwendige Vorsehung von Erdungselektroden auch in Kunststoffrohrleitungssystemen eingesetzt werden.

In weiterer vorteilhafter Ausgestaltung ist vorgesehen, daß das ringförmige Erdungselement gleichzeitig als Dichtung im Leitungssystem wirkt und entsprechend plaziert ist. Durch sein statisch nachgiebiges Material ist zum einen eine gute Dichtwirkung erzielbar, und durch die elektrische Leitfähigkeit ist eine gute Erdung möglich.

In vorteilhafter Weise ist vorgesehen, daß das auch als Dichtung wirkende Erdungselement mit einer seitlich angebrachten Anformung zur elektrischen Kontaktierung versehen ist. Dadurch kann auf einfache Weise ein Erdungskabel angeschlossen werden.

Über die erfindungsgemäß gegebene elektrische Leitfähigkeit des Erdungselementes ist nun eine galvanische Erdung des Messfluids möglich. Auf dies Weise kann das Rohrleitungssystem zweckmäßig aus nichtleitendem Kunststoff bestehen, und über das erfindungsgemäße Erdungselement 20 ist dennoch eine sichere und zuverlässige Erdung des Messfluids gegeben.

Zur Erzielung einer guten elektrischen Leitfähigkeit ist für das Erdungselement ein Kunststoff mit eingebrachten Carbonfasern vorgesehen.

Ebenso ist nun eine magnetisch induktive Durchflußmesseinrichtung auch in Kunststoffrohrleitungen einsetzbar, weil mit dem erfindungsgemäßen Erdungselement eine gute und wirksame galvanische Erdung des Messfluids möglich ist.

Die Erfindung ist in der Zeichnung dargestellt und nachfolgend näher beschrieben.

Es zeigt:
- Fig. 1:: Meßrohr mit erfindungsgemäßer Erdungsscheibe
- Fig. 2:: Erdungsscheibe in Frontalansicht.

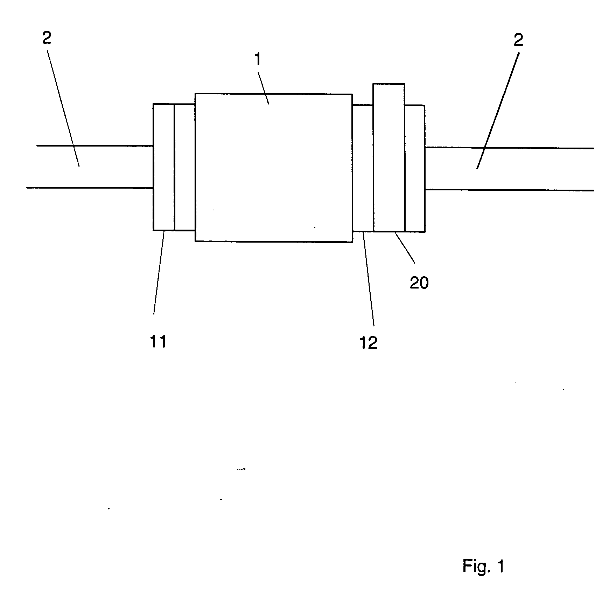

Figur 1 zeigt schematisch eine magnetisch induktive Durchflußmesseinrichtung 1 welche in einem Rohrleitungssystem 2 eingeflanscht ist. Hierzu weist die Durchflußmesseinrichtung 1 beidendig Befestigungsflansche 11 und 12 auf. Über diese Flansche 11 und 12 werden die Leitungselemente des Rohrleitungssystems angebracht. In einem vorteilhaften Ausführungsbeispiel der Erfindung wird das Erdungselement 20 nun als Dichtung ausgebildet, welches zwischen die Flansche zwischen Rohrleitung 2 und Durchflußmesseinrichtung 1 eingelegt wird. Das erfindungsgemäß eingesetzte Erdungselement besteht aus einem leitfähigen Kunststoff, vorzugsweise mit Carbonfasern und wird so gepresst, daß es gleichzeitig dichtet. Innen weist das in Form einer Dichtungsscheibe ausgebildete Erdungselement 20 ein Durchgangsloch auf, welches mit seiner Innenmantelfläche Berührung mit dem Messfluid hat.

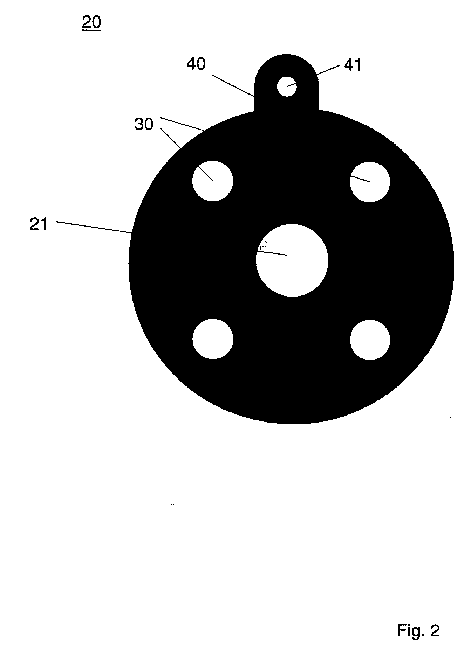

Figur 2 zeigt das Erdungselement 20 in Frontalansicht. Es ist rund ausgebildet, wie eine Dichtung und weist ein mittleres Durchgangsloch 21 auf, welches an seiner Innenmanteloberfläche vom strömenden Messfluid berührt wird. Desweiteren weist das Erdungselement 20 weitere Durchgangslöcher 30 auf, zur Aufnahme der hier nicht weiter dargestellten Befestigungsschrauben, zur Befestigung mit den Flanschen. Weiterhin ist eine Anformung 40 an dem Erdungselement 20, in welchem eine Durchgangsöffnung 41 zur elektrischen Kontaktierung vorgesehen ist.

## Patentansprüche

1. Durchflußmeßeinrichtung mit aus Kunststoff bestehender Messfluidleitung,
**dadurch gekennzeichnet,**
**daß** zur galvanischen Erdung des Messfluids ein ringförmiges, aus elektrisch leitfähigem Kunststoff bestehendes Erdungselement (20) vorgesehen ist, welches ringförmig um den Messfluidstrom angeordnet, und denselben elektrisch leitend berührend ist.

2. Durchflußmeßeinrichtung nach Anspruch 1,
**dadurch gekennzeichnet,**
**daß** das ringförmige Erdungselement (20) gleichzeitig als Dichtung im Leitungssystem (2) wirkt und entsprechend plaziert ist.

3. Durchflußmeßeinrichtung nach Anspruch 1 oder 2,
**dadurch gekennzeichnet,**
**daß** die Durchflußmesseinrichtung eine magnetisch induktive Durchflussmesseinrichtung ist.

4. Durchflußmesseinrichtung nach einem der vorhergehenden Ansprüche,
**dadurch gekennzeichnet,**
**daß** das auch als Dichtung wirkende Erdungselement (20) mit einer seitlich angeformten Anformung (40) zur elektrischen Kontaktierung versehen ist.

5. Durchflußmesseinrichtung nach einem der vorhergehenden Ansprüche,
**dadurch gekennzeichnet,**
**daß** das Erdungselement (20) aus Kunststoff mit eingelegten Carbonfasern besteht.
